# EUROPÄISCHE PATENTSCHRIFT

(11) **EP 3 563 117 B1**
(45) Veröffentlichungstag und Bekanntmachung des Hinweises auf die Patenterteilung: **03.08.2022**
(21) Anmeldenummer: 17832508.0
(22) Anmeldetag: 28.12.2017
(51) Int. Cl.: G01D 5/14

(54) **SENSOREINRICHTUNG**
SENSOR DEVICE
DISPOSITIF DE DÉTECTION

(30) Priorität: 29.12.2016 DE 102016226301; 13.12.2017 DE 102017222677
(43) Veröffentlichungstag der Anmeldung: 06.11.2019
(73) Patentinhaber: Robert Bosch GmbH, 70442 Stuttgart (DE)
(72) Erfinder: KIMMERLE, Mathias, 71711 Steinheim (DE)
(86) Internationale Anmeldenummer: PCT/EP2017/084683
(87) Internationale Veröffentlichungsnummer: WO 2018/122284

(56) Entgegenhaltungen:
- EP-A1- 0 979 988
- WO-A1-2007/025720
- DE-A1- 1 483 389
- DE-A1-102009 022 751
- DE-B- 1 135 037
- US-A- 5 289 129
- US-A1- 2004 040 391
- US-A1- 2009 102 463
- US-A1- 2010 256 480
- US-A1- 2016 116 554

## Beschreibung

Die Erfindung betrifft ein Verfahren und eine Vorrichtung zum Herstellen eines Messwertgebers für eine Sensoreinrichtung, die einen Magnetkörper als Messwertgeber aufweist, dessen Magnetfeldausrichtung durch wenigstens einen Messwertsensor erfassbar ist, sodass in Abhängigkeit von der erfassten Magnetfeldausrichtung auf die aktuelle Position des Messwertgebers geschlossen werden kann.

### Stand der Technik

Sensoreinrichtungen mit sich veränderndem Magnetfeld sind aus dem Stand der Technik bekannt. So offenbart beispielswiese die Patentschrift EP 2 430 418 B1 eine Sensoreinrichtung zum Erfassen eines Torsionswinkels, einer Längenänderung oder eines Magnetfelds mittels eines von einer Spule umwickelten Sensorkörpers. Auch aus der Offenlegungsschrift US 2016/0116554 A ist bereits eine Sensoreinrichtung mit einem ähnlichen Messwertgeber bekannt. Dem Messwertgeber ist jeweils zumindest ein Messfühler zugeordnet, mittels dessen das magnetische Feld des Messwertgebers erfasst werden kann. In Abhängigkeit der erfassten Messfeld-Werte ist dann eine Position oder Positionsänderung des Messwertgebers feststellbar.

Zum Herstellen eines derartigen Messwertgebers ist es bekannt, die Magnetisierung derart auszubilden, dass sich das resultierende Magnetfeld um eine Achse dreht, die quer zur Bewegungsrichtung des Messwertgebers ausgerichtet ist.

Aus der Patentschrift EP 0 979 988 B1 ist eine weitere Sensoreinrichtung der eingangs genannten Art bekannt, bei welcher ein Messwertgeber helikal durch eine Spulenwicklung aufmagnetisiert ist. In Abhängigkeit von einer Magnetfeldstärke und der Magnetfeldausrichtung wird dabei die Schiebeposition des Messwertgebers bestimmt. Die Drehachse des Magnetfelds liegt dabei parallel zur Bewegungsrichtung des Messwertgebers, sodass sich das Magnetfeld in einer Ebene senkrecht zur Bewegungsrichtung dreht.

Aus der US 2009/102463 A1 ist eine Sensoranordnung bekannt, bei der sich ein Messobjekt entlang einer Erzeugerspule mit konstanter Steigung der Wicklungen verschiebt und dabei zumindest temporär magnetisiert wird. Anhand des sich daraus ergebenden Magnetfeldes wird dann eine Position des Messobjekts durch Detektorspulen ermittelt.

### Offenbarung der Erfindung

Das erfindungsgemäße Verfahren mit den Merkmalen des Anspruchs 1 zur Herstellung eines Messwertgebers zeichnet sich dadurch aus, dass zunächst ein Magnetkörper bereitgestellt wird, sowie eine bestrombare Spule. Die Spule wird zu einer helix- oder schraubenförmigen Wicklung geformt, deren Innendurchmesser größer ist als die Außenkontur des Magnetkörpers, sodass der Magnetkörper in seiner Längserstreckung in die Wicklung einführbar ist, wobei die Wicklung derart geformt wird, dass sich ihre Steigung - in Längserstreckung gesehen - zumindest abschnittsweise verändert. Der Magnetkörper wird in die Spule eingeführt und anschließend wird die Spule bestromt, sodass der Magnetkörper zur Herstellung des Messwertgebers entsprechend des Verlaufs der helixförmigen Wicklung aufmagnetisiert wird. Anschließend wird die Spule entfernt.

Hierdurch ergibt sich der Vorteil, dass durch die Magnetisierung ein sich drehendes Magnetfeld erzeugt wird, das sich um eine Achse dreht, die sich parallel zur Längserstreckung des Magnetkörpers und damit insbesondere entlang der Bewegungsrichtung des Magnetkörpers in der Sensoreinrichtung erstreckt. Hierdurch ist eine einfache und besonders genaue Feststellung der Positionen des Messwertgebers in der Sensoreinrichtung gewährleistet. Insbesondere ist vorgesehen, dass die Spule ortsfest in einer Vorrichtung beziehungsweise Magnetisierungseinrichtung bereitgestellt wird, in welche der Magnetkörper einführbar ist. Alternativ kann die Spule helixförmig auf dem Magnetkörper aufgewickelt werden, wobei der Magnetkörper dann nach dem Bestromen aus der Spule herausgezogen wird. Dadurch, dass sich die Steigung der Wicklung zumindest abschnittsweise verändert, können Bereiche des Messwertgebers hergestellt werden, die eine unterschiedlich hohe Messsensitivität aufweisen. Dadurch werden die Einsatzmöglichkeiten des so hergestellten Messwertgebers erweitert.

Gemäß einer bevorzugten Weiterbildung der Erfindung ist vorgesehen, dass der Magnetkörper aus einem isotropen Magnetwerkstoff gefertigt wird. Damit ist der Magnetkörper in jede beliebige Richtung magnetisierbar, sodass sich der vorteilhafte Verlauf der Magnetfeldausrichtung permanent und kostengünstig herstellen lässt.

Besonders bevorzugt ist vorgesehen, dass sich die Steigung der Wicklung abschnittsweise kontinuierlich oder diskontinuierlich verändert, sodass über die gesamte Länge des Magnetkörpers beziehungsweise des Messwertgebers seine Position eindeutig feststellbar ist. Dazu ist beispielsweise vorgesehen, dass die Steigung in eine Längsrichtung des Messwertgebers kontinuierlich zunimmt oder abnimmt.

Gemäß einer bevorzugten Weiterbildung der Erfindung ist vorgesehen, dass die Wicklung derart geformt wird, dass sie zumindest abschnittsweise - in Längserstreckung gesehen - eine konstante Steigung aufweist. Damit ergeben sich Abschnitte der Wicklung und des Messwertgebers, die eine konstante Steigung aufweisen, wobei aufgrund der vorteilhaften Steigungsveränderung diese Abschnitte unterschiedliche Steigungen aufweisen. So kann die Wicklung beispielsweise einen Abschnitt mit einer konstanten Steigung und einen Abschnitt mit einer sich kontinuierlich verändernden Steigung aufweisen.

Gemäß einer bevorzugten Weiterbildung der Erfindung ist vorgesehen, dass die Wicklung derart geformt wird, dass sie zumindest zwei Abschnitte mit unterschiedlichen konstanten Steigungen aufweist. Hierdurch ergeben sich beispielsweise unterschiedlich sensible Messbereiche des Messwertgebers.

Aufgrund der vorteilhaften Magnetisierung ist eine einfache und sichere Bestimmung der Position des Magnetkörpers bestimmbar und die Wicklung beziehungsweise Magnetisierung ist kostengünstig herstellbar. Die Wicklung weist bevorzugt zwei oder mehr derartiger Abschnitte mit konstanter Steigung auf.

Weiterhin ist bevorzugt vorgesehen, dass die Wicklung derart geformt wird, dass sie zumindest einen Klemmabschnitt aufweist, in welchem ihre Steigung gleich Null ist, sodass sich der Drehwinkel des Magnetfelds des Magnetkörpers in dem durch den Klemmabschnitt erzeugten beziehungsweise aufmagnetisierten Klemmbereich in Verschieberichtung des Messwertgebers nicht verändert. Hierdurch wird ein Längsabschnitt des Messwertgebers geschaffen, in welchem eine relevante Sensorinformation "an/aus" ist, und nicht ein bestimmter Winkel. Unter einer Steigung gleich null wird insoweit eine Magnetisierung verstanden, die sich parallel zur Längserstreckung des Permanentmagneten erstreckt und sich in diesem Klemmbereich nicht dreht. Insoweit verändert sich die Magnetisierung in diesem Klemmbereich nicht.

Bevorzugt wird der Klemmbereich an einem Endbereich der Wicklung ausgebildet oder in einem Bereich beabstandet zu den Endbereichen der Wicklung beziehungsweise des Magnetkörpers. Der Klemmbereich kann also an einem Ende des Magnetkörpers beziehungsweise der Wicklung zugeordnet sein oder beispielsweise auch mittig in dem Magnetkörper beziehungsweise der Wicklung zwischen zwei Abschnitten liegen, die eine gleiche oder unterschiedliche Steigungen aufweisen. Hierdurch wird das Bestimmen einer Messposition noch weiter verbessert und die Anwendungsfelder des Messwertgebers erweitert.

Insbesondere wird der Klemmbereich zwischen zwei Abschnitten mit einer vorgegebenen Steigung der Wicklung geformt, wobei die Steigung in den beiden Abschnitten gleich oder unterschiedlich ist und - wie zuvor bereits erwähnt - sich bevorzugt kontinuierlich oder diskontinuierlich verändert oder konstant ist.

Die erfindungsgemäße Vorrichtung mit den Merkmalen des Anspruchs 8 zeichnet sich durch eine bestrombare Spule aus, die zumindest abschnittsweise zu einer helixförmigen Wicklung geformt ist, deren Innendurchmesser größer ist als die Außenkontur eines zu magnetisierenden Magnetkörpers, wobei die Wicklung derart geformt ist, dass sich ihre Steigung - in Längserstreckung gesehen - zumindest abschnittsweise verändert, sowie durch eine Energiequelle, mittels derer die Spule zum Aufmagnetisieren des Magnetkörpers zur Herstellung des Messwertgebers bestrombar ist. Es ergeben sich hierdurch die bereits genannten Vorteile.

Weitere Vorteile und bevorzugte Merkmale ergeben sich insbesondere aus dem zuvor Beschriebenen sowie aus den Ansprüchen.

Gemäß einer bevorzugten Weiterbildung der Erfindung ist vorgesehen, dass die Steigung der Wicklung auf dem Magnetkörper dort am geringsten ist, wo die höchste Messgenauigkeit erfordert ist. Dadurch ist die Änderung eines betrachteten Winkels des Magnetfeldes bei axialer Bewegung des Messwertgebers relativ zu den Messfühlern an eben dieser Stelle am höchsten, sodass hier die Position des Messwertgebers besonders exakt feststellbar ist.

Im Folgenden soll die Erfindung anhand der Zeichnung näher erläutert werden. Dazu zeigen
- Figur 1: eine vorteilhafte Sensoreinrichtung in einer vereinfachten Darstellung und
- Figur 2: die Herstellung eines vorteilhaften Messwertgebers der Sensoreinrichtung in einer vereinfachten Darstellung.

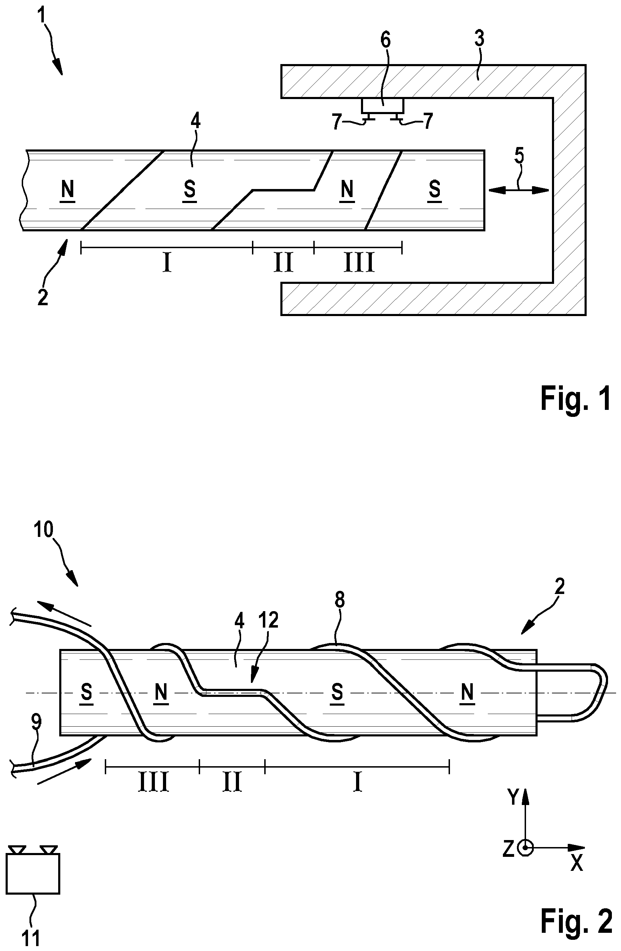

Figur 1 zeigt in einer vereinfachten Schnittdarstellung eine Sensoreinrichtung 1, die einen Messwertgeber 2 aufweist, der in einem Gehäuse 3 verlagerbar ist. Der Messwertgeber 2 weist einen zylinderförmigen Magnetkörper 4 auf, der einen kreisförmigen Querschnitt aufweist und insbesondere aus einem isotropen Magnetwerkstoff hergestellt ist, und ist in seiner Längserstreckung beziehungsweise axial in dem Gehäuse 3 verlagerbar angeordnet, wie durch einen Doppelpfeil 5 gezeigt. An dem Gehäuse 3 ist außerdem eine Messstelle 6 vorgesehen, mittels welcher ein magnetisches Feld des Messwertgebers 2 erfassbar ist. Dazu weist die Messstelle 6 einen oder mehrere Messfühler zum Erfassen magnetischer Felder auf. Insbesondere sind die Messfühler als Hall-Sensoren ausgebildet.

Der Messwertgeber 2 weist außerdem eine Magnetisierung 8 auf, die helikal verlaufend auf dem Magnetkörper 4 ausgebildet ist beziehungsweise sich helixförmig über den Magnetkörper 4 erstreckt. Dabei weist die Magnetisierung 8 eine Steigung auf, die sich zumindest abschnittsweise über die Länge des Magnetkörpers 4 erstreckt. Die Steigung verändert sich dabei vorliegend in Längserstreckung des Magnetkörpers gesehen kontinuierlich oder diskontinuierlich.

Gemäß dem vorliegenden Ausführungsbeispiel von Figur 1 ist vorgesehen, dass die Magnetisierung 8 mehrere Abschnitte I, II und III aufweist, in welchen die Magnetisierung 8 unterschiedliche Steigungen aufweist. So ist vorliegend vorgesehen, dass die Steigung im Abschnitt I kleiner als die Steigung im Abschnitt III, und dass im Abschnitt II die Steigung gleich Null ist, sodass sich ein sogenannter Klemmbereich ausbildet, innerhalb dessen ein Verschieben des Messwertgebers 2 zu keiner Messwertveränderung führt. In den Abschnitten I und III ist die Steigung jeweils konstant ausgebildet.

Mit der vorteilhaften Sensoreinrichtung 1 lassen sich hochgenaue Messungen durchführen, wobei die Sensibilität der Sensoreinrichtung 1 auf unterschiedliche Verschiebewegabschnitte mittels der jeweiligen Steigung unterschiedlich einstellbar ist, und auch Klemmbereiche (Abschnitt II) einfach herstellbar sind.

Im Folgenden soll die Herstellung des Magnetkörpers 4 erläutert werden.

Figur 2 zeigt dazu in einer vergrößerten Darstellung eine Vorrichtung 10 zur Herstellung des Messwertgebers 2. Zu sehen ist dabei der Messwergeber 2 beziehungsweise der Magnetkörper 4. Gemäß dem dargestellten Ausführungsbeispiel wird die Magnetisierung 8 mit Hilfe von einer durch einen Wicklungsdraht gebildeten Spule 9 der Vorrichtung 10 hergestellt, die zur Aufmagnetisierung des Magnetkörpers 4 koaxial zu dem Magnetkörper 4 angeordnet wird.

Die Vorrichtung 10 weist dazu bevorzugt eine Halteeinrichtung (hier nicht dargestellt) auf, die zur Halterung und Ausrichtung des Magnetkörpers 4 innerhalb der Wicklung ausgebildet ist, sodass beispielsweise ein Berührungskontakt zwischen Wicklung und Magnetkörper 4 beziehungsweise eine zentrale Anordnung und Ausrichtung des Magnetkörpers 4 zu der Spule 9 gewährleistet ist. Insbesondere ist die Halteeinrichtung dazu ausgebildet, den Magnetkörper 4 in Richtung seiner Längserstreckung in die Spule 9 einzufahren und herauszufahren. Die Vorrichtung 10 weist außerdem eine Energiequelle 11 auf, die mit der Spule 9 verbindbar ist, um diese zur Herstellung des Messwertgebers 2 zu bestromen. Wird die Spule 9 bestromt, so entsteht über dem Wicklungsdraht, in den der Strom eingeht, ein Nordpol N und darunter ein Südpol S. Prinzipbedingt hat jeder Pol N, S auf der rückseitigen Mantelfläche des Magnetkörpers 4 einen vollwertigen Gegenpol.

Um den zuvor beschriebenen Verlauf der helikalen Aufmagnetisierung des Magnetkörpers 4 zu erhalten, ist die Spule zu einer helixförmigen Wicklung geformt, die mehrere Abschnitte I, II und III aufweist, in denen jeweils unterschiedliche Steigungen, korrespondierend mit den zu Figur 1 beschriebenen Steigungen des Magnetkörpers 4, ausgebildet sind, wie in Figur 2 gezeigt.

Sobald die Magnetisierung 8 dadurch hergestellt wurde, entspricht ihr Verlauf dem helixförmigen Verlauf der Spule 9, sodass auch die Magnetisierung 8 beziehungsweise deren Magnetfeldausrichtung sich helixförmig oder schraubförmig entlang des Magnetkörpers 4 erstreckt. Anschließend wird die Spule 9 entfernt und der Magnetköper 4 im Gehäuse 3 verbaut.

Wird dieser Messwertgeber 2 nunmehr linear bewegt, gemäß Pfeil 5, und an der Messstelle 6, die insofern ortsfest dazu ist, die resultierenden Winkel und/oder einzelne Komponenten der magnetischen Flussdichte beziehungsweise des Magnetfelds des Messwertgebers 2 mittels der Messfühler 7 gemessen, ist es möglich, in alle drei Raumrichtungen gemäß dem in Figur 2 gezeigten Koordinatensystem, eine oder mehr oder weniger sinusoide Änderung aller drei Flussdichtekomponenten festzustellen.

Die Kombinatorik von je zwei aus drei gemessenen Flussdichtekomponenten führt in den meisten Fällen zu mindestens zwei kontinuierlichen Arcustangens-Informationen. Es entstehen dabei zwei kontinuierliche Ausgangssignale, die in Kombination gegebenenfalls die Genauigkeit und Robustheit des Messsignals erhöhen.

Aufgrund der vorteilhaften Steigung der helix- oder schraubenförmigen Magnetisierung 8, die sich entlang des Magnetkörpers 4 optional verändert, ist eine eindeutige Information beziehungsweise ein eindeutiger Raumwinkel, auch über einen magnetischen Winkel von 360° hinaus, erfassbar, mittels dessen die Schiebeposition des Magnetkörpers 4 beziehungsweise des Messwertgebers 2 eindeutig feststellbar ist.

Bevorzugt wird die Steigung der Magnetisierung 8 derart gewählt, dass sie dort am geringsten ist, wo die höchste Messgenauigkeit erfordert ist, sodass ein Verschieben des Messwertgebers 2 zu der Messstelle 6 in dieser Stelle die höchste Auflösegenauigkeit bezüglich des Messsignals und damit die höchste Messempfindlichkeit aufweist. Dies ist bei Sensoranwendungen empfehlenswert, bei denen ein Messbereich genauer sein muss als andere Bereiche.

In diesem Fall ist es außerdem denkbar, ein Differenzmessprinzip mit zwei Messstellen 6 auszubilden, weil dann das Differenzsignal dort am Größten ist, wo die Steigung der Magnetisierung 8 idealer Weise ähnlich groß ist wie der Abstand der beiden Messstellen 6 zueinander.

Zweckmäßigerweise weist die Sensoreinrichtung 1 ein hier nicht dargestelltes Steuergerät oder zumindest ein Mikrokontroller auf, welcher die Ausgangssignale der Messfühler 7 überwacht, um die Position des Messwertgebers 2 bezüglich der ortsfesten beziehungsweise gehäusefesten Messstelle 6 zu ermitteln.

Vorteilhafterweise erstreckt sich die konstante oder sich verändernde Steigung innerhalb eines begrenzten Abschnitts in Längsrichtung des Magnetkörpers beziehungsweise der Spule 9 gesehen. Wie in Figur 2 gezeigt, kann die Spule 9 abschnittsweise auch mit einer Steigung gleich Null verlaufen, sodass sich der Drehwinkel des Magnetfelds des Magnetkörpers 4 in diesem sogenannten Klemmbereich 12 nicht verändert. Der Klemmbereich 12 kann dabei zwischen zwei Spulenabschnitten mit einer vorbestimmten konstanten oder sich verändernden Steigung, wie in dem vorliegenden Ausführungsbeispiel gezeigt, angeordnet werden, oder auch in einem oder beiden der Endbereiche des Magnetkörpers 4.

## Patentansprüche

1. Verfahren zum Herstellen eines Messwertgebers (2) für eine Sensoreinrichtung (1), die einen Magnetkörper (4) als Messwertgeber (2) aufweist, dessen Magnetfeldausrichtung durch wenigstens einen Messwertsensor erfassbar ist, sodass in Abhängigkeit von der erfassten Magnetfeldausrichtung auf die aktuelle Position des Messwertgebers (2) geschlossen werden kann, mit folgenden Schritten:
- Bereitstellen eines Magnetkörpers (4),
- Bereitstellen einer bestrombaren Spule (9),
- Formen der Spule (9) zu einer helixförmigen Wicklung, deren Innendurchmesser größer ist als die Außenkontur des Magnetkörpers (4), wobei
- die Wicklung derart geformt wird, dass sich ihre Steigung - in Längserstreckung der Wicklung gesehen - zumindest abschnittsweise verändert
- Anordnen des Magnetkörpers (4) innerhalb der Spule (9), insbesondere koaxial zueinander,
- Bestromen der Spule (9) zum Aufmagnetisieren des Magnetkörpers (4) zur Herstellung des Messwertgebers (2), sodass auch die Magnetisierung (8) des Magnetkörpers (4) oder deren Magnetfeldausrichtung sich helixförmig oder schraubförmig, dem helixförmigen Verlauf der Spule (9) entsprechend, entlang des Magnetkörpers (4) erstreckt, und
- Entfernen der Spule (9).

2. Verfahren nach Anspruch 1, **dadurch gekennzeichnet, dass** die Wicklung derart geformt wird, dass sich ihre Steigung innerhalb zumindest eines Abschnitts kontinuierlich verändert.

3. Verfahren nach einem der vorhergehenden Ansprüche, **dadurch gekennzeichnet, dass** die Wicklung derart geformt wird, dass sie zumindest abschnittsweise eine konstante Steigung aufweist.

4. Verfahren nach einem der vorhergehenden Ansprüche, **dadurch gekennzeichnet, dass** die Wicklung derart geformt wird, dass sie zumindest zwei Abschnitte mit unterschiedlichen konstanten Steigungen aufweist.

5. Verfahren nach einem der vorhergehenden Ansprüche, **dadurch gekennzeichnet, dass** die Wicklung derart geformt wird, dass sie zumindest einen Klemmabschnitt (12) aufweist, innerhalb dessen die Steigung der Spule (9) gleich Null ist.

6. Verfahren nach Anspruch 5, **dadurch gekennzeichnet, dass** der Klemmabschnitt (12) an einem Endbereich der Wicklung beziehungsweise Magnetkörpers (4) geformt wird, oder in einem Bereich beabstandet zu dem Endbereich.

7. Verfahren nach einem der Ansprüche 5 und 6, **dadurch gekennzeichnet, dass** der Klemmabschnitt (12) zwischen zwei Abschnitten der Wicklung mit vorgegebener Steigung geformt wird.

8. Vorrichtung (10) zur Herstellung eines Messwertgebers (2) für eine Sensoreinrichtung (1), wobei die Vorrichtung (10) dazu eingerichtet ist, ein Verfahren nach einem der Ansprüche 1 bis 7 durchzuführen, umfassend eine bestrombare Spule (9), die zu einer helixförmigen Wicklung geformt ist, deren Innendurchmesser größer ist als die Außenkontur eines als Messwertgeber (11) zu magnetisierenden Magnetkörpers (4), wobei die Wicklung derart geformt ist, dass sich ihre Steigung - in Längserstreckung der Wicklung gesehen - zumindest abschnittsweise verändert und mit einer Energiequelle zum Bestromen der Spule (9).

## Claims

1. Method for producing a measurement transducer (2) for a sensor device (1), which has a magnetic body (4) as the measurement transducer (2), the magnetic field orientation of which can be detected by at least one measurement value sensor, so that the current position of the measurement transducer (2) can be deduced depending on the detected magnetic field orientation, having the following steps:
- providing a magnetic body (4),
- providing a coil (9) which can be supplied with a current,
- forming the coil (9) into a helical winding, whose inner diameter is greater than the outer contour of the magnetic body (4), wherein
- the winding is formed in such a way that its gradient - viewed in the longitudinal extension of the winding - changes at least in some sections,
- arranging the magnetic body (4) within the coil (9), in particular, coaxially to each other,
- supplying current to the coil (9) to magnetize the magnetic body (4) for producing the measurement transducer (2), so that the magnetization (8) of the magnetic body (4) or its magnetic field orientation also extends in a helical or screw-shaped pattern, according to the helical path of the coil (9), along the magnetic body (4), and
- removing the coil (9).

2. Method according to Claim 1, **characterized in that** the winding is formed in such a way that its gradient changes continuously within at least one section.

3. Method according to either of the preceding claims, **characterized in that** the winding is formed in such a way that it has a constant gradient at least in some sections.

4. Method according to any one of the preceding claims, **characterized in that** the winding is formed in such a way that it has at least two sections with different constant gradients.

5. Method according to any one of the preceding claims, **characterized in that** the winding is formed in such a way that it has at least one clamped section (12), within which the gradient of the coil (9) is equal to zero.

6. Method according to Claim 5, **characterized in that** the clamped section (12) is formed at an end region of the winding or magnetic body (4), or in a region spaced apart from the end region.

7. Method according to either of Claims 5 and 6, **characterized in that** the clamped section (12) is formed between two sections of the winding with a predefined gradient.

8. Device (10) for producing a measurement transducer (2) for a sensor device (1), wherein the device (10) is designed to carry out a method according to any one of Claims 1 to 7, comprising a coil (9) which can be supplied with a current and which is formed into a helical winding whose inner diameter is greater than the outer contour of a magnetic body (4) to be magnetized as a measurement transducer (11), wherein the winding is formed in such a way that its gradient - viewed in the longitudinal extension of the winding - varies at least in some sections, and with an energy source for supplying current to the coil (9).

## Revendications

1. Procédé permettant de fabriquer un transducteur de mesure (2) pour un dispositif capteur (1) qui présente un corps magnétique (4) comme transducteur de mesure (2) dont l'orientation de champ magnétique peut être détectée par au moins un capteur de mesure de sorte qu'en fonction de l'orientation de champ magnétique détectée, la position actuelle du transducteur de mesure (2) peut être déduite, comprenant les étapes suivantes consistant à :
- fournir un corps magnétique (4),
- fournir une bobine (9) pouvant être excitée,
- former la bobine (9) en enroulement hélicoïdal dont le diamètre intérieur est supérieur au contour extérieur du corps magnétique (4), dans lequel
- l'enroulement est formé de telle sorte que son pas - vu dans la direction longitudinale de l'enroulement - varie au moins par endroits,
- disposer le corps magnétique (4) à l'intérieur de la bobine (9), en particulier de manière coaxiale l'un par rapport à l'autre,
- exciter la bobine (9) pour magnétiser le corps magnétique (4) en vue de la fabrication du transducteur de mesure (2) de sorte que la magnétisation (8) du corps magnétique (4) ou l'orientation de champ magnétique de celle-ci s'étend également de manière hélicoïdale ou en spirale, selon l'allure hélicoïdale de la bobine (9), le long du corps magnétique (4), et
- retirer la bobine (9).

2. Procédé selon la revendication 1, **caractérisé en ce que** l'enroulement est formé de telle sorte que son pas varie en continu à l'intérieur d'au moins une section.

3. Procédé selon l'une quelconque des revendications précédentes, **caractérisé en ce que** l'enroulement est formé de telle sorte qu'il présente un pas constant au moins par endroits.

4. Procédé selon l'une quelconque des revendications précédentes, **caractérisé en ce que** l'enroulement est formé de telle sorte qu'il présente au moins deux sections ayant des pas constants différents.

5. Procédé selon l'une quelconque des revendications précédentes, **caractérisé en ce que** l'enroulement est formé de telle sorte qu'il présente au moins une section de serrage (12) à l'intérieur de laquelle le pas de la bobine (9) est égal à zéro.

6. Procédé selon la revendication 5, **caractérisé en ce que** la section de serrage (12) est formée au niveau d'une zone d'extrémité de l'enroulement ou du corps magnétique (4) ou dans une zone espacée de la zone d'extrémité.

7. Procédé selon l'une quelconque des revendications 5 et 6, **caractérisé en ce que** la section de serrage (12) est formée entre deux sections de l'enroulement avec un pas prédéfini.

8. Dispositif (10) permettant de fabriquer un transducteur de mesure (2) pour un dispositif capteur (1), le dispositif (10) étant conçu pour exécuter un procédé selon l'une quelconque des revendications 1 à 7, comprenant une bobine (9) pouvant être excitée qui est formée en enroulement hélicoïdal dont le diamètre intérieur est supérieur au contour extérieur d'un corps magnétique (4) à magnétiser en tant que transducteur de mesure (11), l'enroulement étant formé de telle sorte que son pas - vu dans la direction longitudinale de l'enroulement - varie au moins par endroits, et comprenant une source d'énergie pour exciter la bobine (9) .
